# FASCICULE DE BREVET EUROPEEN

(11) **EP 0 824 430 B1**
(45) Date de publication et mention de la délivrance du brevet: **13.06.2001**
(21) Numéro de dépôt: 96906812.1
(22) Date de dépôt: 12.03.1996
(51) Int. Cl.: B60T 13/57

(54) **SERVOMOTEUR PNEUMATIQUE A CLAPET INERTIEL**
UNTERDRUCK-BREMSKRAFTVERSTÄRKER MIT TRÄGHEITSKRAFTBETÄTIGTEM VENTIL
PNEUMATIC SERVOMOTOR WITH INERTIAL VALVE

(30) Priorité: 25.04.1995 FR 9504904
(43) Date de publication de la demande: 25.02.1998
(73) Titulaire: Bosch Systemes de Freinage, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR)
(74) Mandataire: Bentz, Jean-Paul
(86) Numéro de dépôt international: FR9600377
(87) Numéro de publication internationale: WO9633895

(56) Documents cités:
- EP-A- 0 509 866

## Description

La présente invention concerne un servomoteur pneumatique d'assistance, notamment utilisable pour l'assistance au freinage sur les véhicules à moteur, comprenant : une enveloppe rigide séparée de façon étanche en au moins deux chambres de travail à volume variable, dont la première est reliée à une première source de pression délivrant une première pression, et dont la seconde est susceptible d'être sélectivement reliée, au moyen d'un clapet à trois voies, à la première source ou à une seconde source de pression délivrant une pression différente de la première; une cloison mobile séparant les deux chambres de travail à l'intérieur de l'enveloppe et susceptible d'être sollicitée par une différence de pression sélectivement établie entre les deux chambres de travail par l'actionnement du clapet à trois voies; un piston pneumatique mobile avec la cloison mobile et renfermant le clapet à trois voies, ce clapet comprenant un obturateur tubulaire dont une première extrémité est sélectivement appliquée sur un premier siège pour interdire et autoriser sélectivement un débit d'air entre la seconde source de pression et la seconde chambre; une tige de commande également logée dans le piston, mobile suivant une première direction axiale, et contrôlant l'actionnement du clapet à trois voies par l'intermédiaire d'un plongeur capable d'écarter du premier siège la première extrémité de l'obturateur tubulaire; une tige de poussée mobile suivant la première direction axiale et susceptible de recevoir, pour la retransmettre, une force de sortie orientée suivant cette première direction axiale; et des moyens de réaction interposés entre les tiges de commande et de poussée pour appliquer sur la tige de commande une réaction qui croît avec la force de sortie.

Des dispositifs de ce type, bien connus dans l'art antérieur, sont aujourd'hui appliqués sur un très grand nombre de véhicules à moteur pour assurer une assistance au freinage.

En dépit de leur caractère traditionnel, ces dispositifs continuent de faire l'objet de recherches importantes visant à en optimiser la caractéristique de fonctionnement, et notamment à en réduire le temps de réponse sans incidence majeure sur leur coût de revient.

La présente invention a précisément pour but de proposer un servomoteur qui répond à ces exigences.

A cette fin, le servomoteur de l'invention est essentiellement caractérisé en ce que l'obturateur est doté d'une liberté de mouvement par rapport au plongeur suivant la première direction axiale et se trouve élastiquement sollicité contre le plongeur suivant une direction inverse de la première direction axiale, et en ce que la première extrémité de l'obturateur est reliée à une masse susceptible d'être mise en mouvement, par un déplacement du plongeur suivant la première direction axiale, pour repousser la première extrémité de l'obturateur tubulaire à distance du plongeur et augmenter ainsi le débit d'air entre la seconde source de pression et la seconde chambre.

D'autres caractéristiques et avantages de l'invention ressortiront clairement de la description qui en est faite ci-après, à titre indicatif et nullement limitatif, en référence aux dessins annexés, dans lesquels :

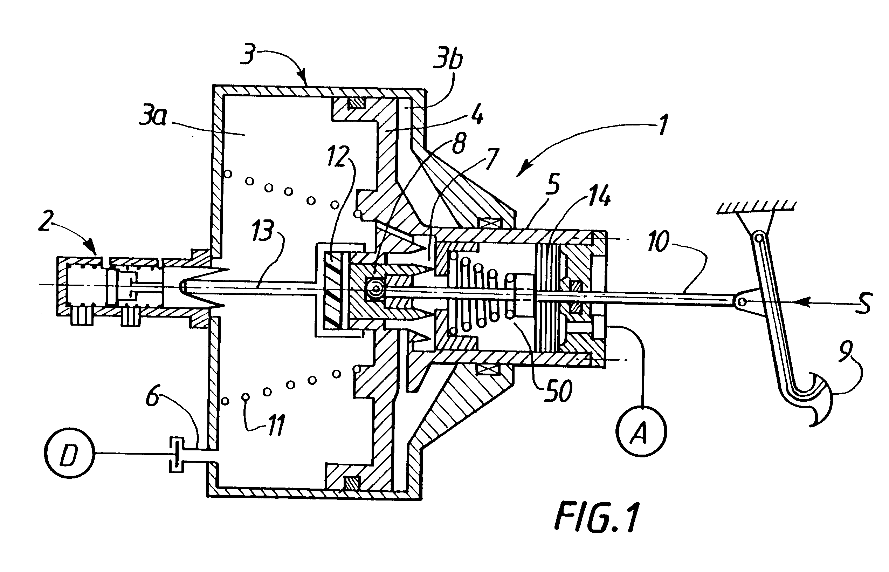

- la Figure 1 est une vue schématique en coupe d'un système de freinage à assistance pneumatique utilisant un servomoteur classique;
- la Figure 2 est une vue en coupe partielle d'un servomoteur connu du brevet US-5 233 907, susceptible de bénéficier des caractéristiques de l'invention et donné à titre d'exemple; et
- la Figure 3 est une vue en coupe partielle d'un détail du servomoteur de la figure 2, repéré par la référence III de cette figure, et modifié pour incorporer les caractéristiques de l'invention.

De façon traditionnelle, un système de freinage à assistance pneumatique comprend un servomoteur pneumatique d'assistance 1, et un maître-cylindre 2.

Le servomoteur comprend une enveloppe rigide 3, une cloison mobile 4, un piston pneumatique 5, un clapet à trois voies 7, une tige de commande 10, une tige de poussée 13, et des moyens de réaction interposés entre les tiges de commande 10 et de poussée 13, par exemple un disque de réaction 12.

La cloison mobile 4 sépare de façon étanche le volume intérieur de l'enveloppe rigide 3 en deux chambres de travail 3a et 3b, de volume complémentaire et variable.

La première chambre de travail 3a est reliée à une source de basse pression D par l'intermédiaire d'une valve anti-retour 6, et la seconde chambre de travail 3b est susceptible d'être sélectivement reliée, au moyen du clapet à trois voies 7, soit à la source de basse pression D, soit à une source de pression relativement haute A, par exemple l'atmosphère.

Grâce à cet agencement connu en soi, l'actionnement du clapet à trois voies 7, qui relie la seconde chambre de travail 3b à la seconde source A, provoque une différence de pression entre les deux chambres de travail 3a et 3b, la cloison mobile 4 se trouvant ainsi sollicitée par une force qui représente la force d'assistance du servomoteur, et se déplaçant à l'intérieur de l'enveloppe 3 à l'encontre de la force exercée par un ressort 11, en entraînant avec elle le piston pneumatique 5, solidaire de la cloison mobile 4.

En pratique, le clapet à trois voies 7 est porté par le piston 5 et commandé par l'actionnement d'une pédale 9 suceptible de transmettre à la tige de commande 10 une force d'entrée exercée suivant la direction axiale S, cette tige de commande étant elle-même portée par le piston 5 et se terminant par un plongeur 8.

La tige de poussée 13 est montée de manière à recevoir, de la part du disque de réaction 12, une poussée correspondant à la somme des forces d'entrée et d'assistance, et à pouvoir retransmettre cette poussée au maître-cylindre 2.

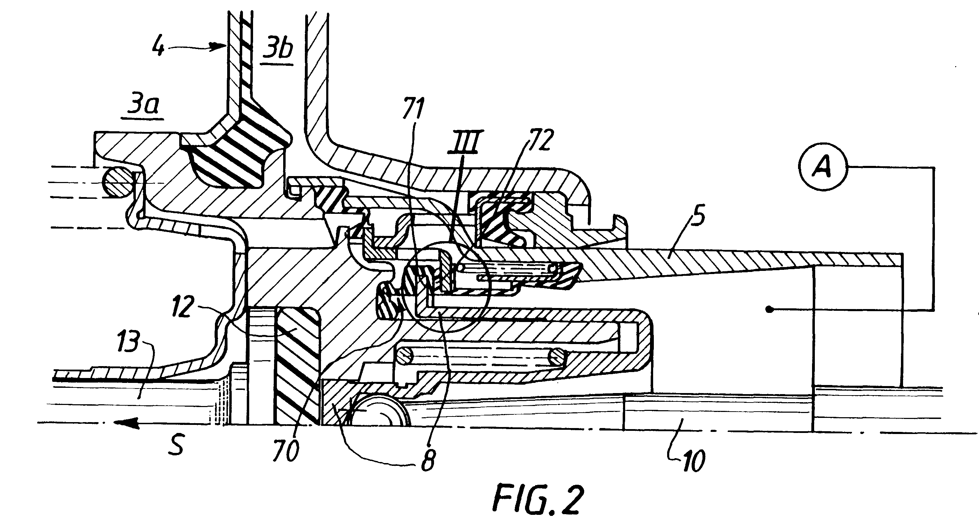

L'invention s'applique à tout servomoteur, tel que celui de la figure 2 par exemple, dans lequel le clapet 7 comprend un obturateur tubulaire 70 dont une première extrémité 71 est sélectivement appliquée sur un premier siège 72 pour interdire et autoriser sélectivement l'établissement d'un débit d'air entre la seconde source de pression A et la seconde chambre de travail, l'actionnement du clapet 7 étant contrôlé par le plongeur 8 qui permet d'écarter sélectivement, de ce premier siège 72, la première extrémité 71 de cet obturateur tubulaire 70.

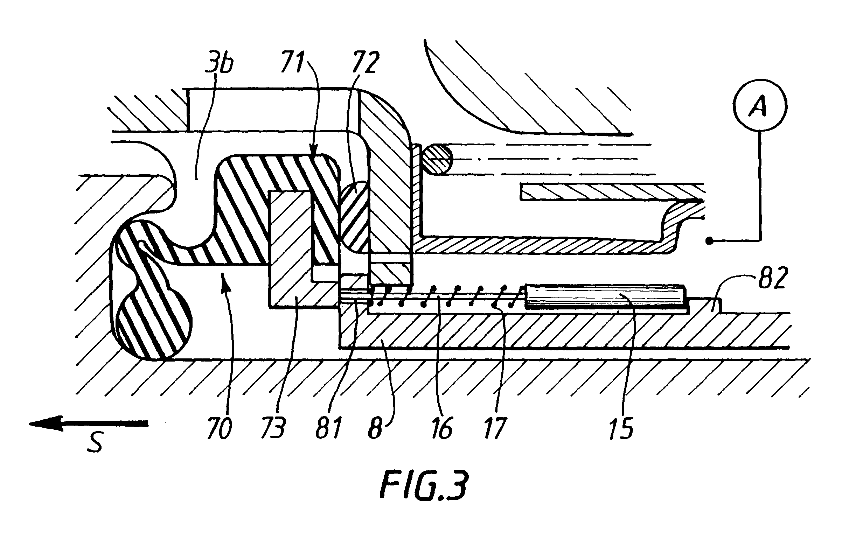

Selon l'invention (figure 3), l'obturateur tubulaire 70 est doté d'une liberté de mouvement par rapport au plongeur 8 suivant la première direction axiale S et se trouve élastiquement sollicité contre le plongeur 8 suivant une direction inverse de la première direction axiale S.

Par ailleurs, la première extrémité 71 de l'obturateur 70 est reliée à une masse 15 susceptible d'être mise en mouvement, par un déplacement du plongeur 8 suivant la première direction axiale S, pour repousser la première extrémité 71 de l'obturateur tubulaire 70 à distance du plongeur 8 et augmenter ainsi le débit d'air entre la seconde source de pression A et la seconde chambre 3b.

Par exemple, la première extrémité 71 de l'obturateur 70 peut comporter un insert métallique 73 solidaire d'une tige 16 fixée à la masse 15 et traversant à coulissement un orifice 81 pratiqué dans le plongeur 8.

Dans ces conditions, la masse 15 peut être mise en mouvement, dans la direction S, par un relief 82 prévu sur le plongeur 8, et l'obturateur tubulaire 70 peut être élastiquement sollicité contre le plongeur 8 au moyen d'un ressort 17 entourant la tige 16 et tendant à écarter la masse 15 de l'orifice 81.

## Revendications

1. Servomoteur pneumatique d'assistance comprenant : une enveloppe rigide (3) séparée de façon étanche en au moins deux chambres de travail à volume variable (3a, 3b), dont la première (3a) est reliée à une première source de pression (D) délivrant une première pression, et dont la seconde (3b) est susceptible d'être sélectivement reliée, au moyen d'un clapet à trois voies (7), à la première source (D) ou à une seconde source de pression (A) délivrant une pression différente de la première; une cloison mobile (4) séparant les deux chambres de travail à l'intérieur de l'enveloppe et susceptible d'être sollicitée par une différence de pression sélectivement établie entre les deux chambres de travail par l'actionnement du clapet à trois voies; un piston pneumatique (5) mobile avec la cloison mobile (4) et renfermant le clapet à trois voies (7), ce clapet comprenant un obturateur tubulaire (70) dont une première extrémité (71) est sélectivement appliquée sur un premier siège (72) pour interdire et autoriser sélectivement un débit d'air entre la seconde source de pression (A) et la seconde chambre (3b); une tige de commande (10) également logée dans le piston, mobile suivant une première direction axiale (S), et contrôlant l'actionnement du clapet à trois voies par l'intermédiaire d'un plongeur (8) capable d'écarter du premier siège (72) la première extrémité (71) de l'obturateur tubulaire (70); une tige de poussée (13) mobile suivant la première direction axiale (S) et susceptible de recevoir, pour la retransmettre, une force de sortie orientée suivant cette première direction axiale (S); et des moyens de réaction (12) interposés entre les tiges de commande (10) et de poussée (13) pour appliquer sur la tige de commande une réaction qui croît avec la force de sortie, caractérisé en ce que l'obturateur (70) est doté d'une liberté de mouvement par rapport au plongeur (8) suivant la première direction axiale (S) et se trouve élastiquement sollicité contre le plongeur (8) suivant une direction inverse de la première direction axiale (S), et en ce que la première extrémité (71) de l'obturateur est reliée à une masse (15) susceptible d'être mise en mouvement, par un déplacement du plongeur (8) suivant la première direction axiale (S), pour repousser la première extrémité (71) de l'obturateur tubulaire (70) à distance du plongeur (8) et augmenter ainsi le débit d'air entre la seconde source de pression (A) et la seconde chambre (3b).

## Claims

1. Pneumatic booster comprising: a rigid casing (3) divided in leaktight fashion into at least two variable-volume working chambers (3a, 3b), the first (3a) of which is connected to a first pressure source (D) delivering a first pressure, and the second (3b) of which can be connected selectively, by means of a three-way valve (7), to the first source (D) or to a second pressure source (A) delivering a pressure different from the first; a moving partition (4) separating the two working chambers inside the casing and capable of being urged by a pressure difference established selectively between the two working chambers through the actuation of the three-way valve; a pneumatic piston (5) which can move with the moving partition (4) and which contains the three-way valve (7), this valve comprising a tubular shutter (70), a first end (71) of which is selectively applied to a first seat (72) in order selectively to prevent and to allow a flow of air between the second pressure source (A) and the second chamber (3b); an operating rod (10) also housed in the piston, able to move in a first axial direction (S) and controlling the actuation of the three-way valve by means of a plunger (8) capable of moving the first end (71) of the tubular shutter (70) away from the first seat (72); a push rod (13) which can move in the first axial direction (S) and can receive, in order to transmit it on, an output force oriented in this first axial direction (S); and reaction means (12) interposed between the operating rod (10) and push rod (13) in order to apply to the operating rod a reaction which increases with the output force, characterized in that the shutter (70) has a freedom of movement with respect to the plunger (8) in the first axial direction (S) and is urged elastically against the plunger (8) in a direction which is the opposite of the first axial direction (S), and in that the first end (71) of the shutter is connected to a mass (15) which can be set in motion by a movement of the plunger (8) in the first axial direction (S) in order to push the first end (71) of the tubular shutter (70) back away from the plunger (8) and thus increase the flow of air between the second pressure source (A) and the second chamber (3b).

## Patentansprüche

1. Pneumatischer Servomotor zur Bremsunterstützung, mit einem starren Gehäuse (3), das in dichter Weise in zumindest zwei Arbeitskammern (3a, 3b) mit veränderlichem Volumen unterteilt ist, wobei die erste Kammer (3a) mit einer ersten Druckquelle (D) verbunden ist, die einen ersten Druck liefert, und wobei die zweite Kammer (3b) mittels eines Dreiwegeventils (7) selektiv mit der ersten Druckquelle (D) oder mit einer zweiten Druckquelle (A) verbindbar ist, die einen vom ersten Druck sich unterscheidenden Druck liefert, mit einer beweglichen Wand (4), welche die beiden Arbeitskammern im Inneren des Gehäuses voneinander trennt und mit einer Druckdifferenz beaufschlagbar ist, die selektiv zwischen den beiden Arbeitskammern durch Betätigung des Dreiwegeventils gebildet wird, und mit einem Pneumatikkolben (5), der mit der beweglichen Wand (4) verschiebbar ist und das Dreiwegeventil (7) umschließt, wobei dieses Ventil ein rohrförmiges Verschlußteil (70) enthält, von dem ein erstes Ende (71) selektiv an einen ersten Sitz (72) gedrückt wird, um einen Luftdurchsatz zwischen der zweiten Druckquelle (A) und der zweiten Kammer (3b) selektiv zu unterbinden bzw. zu gestatten, einer Steuerstange (10), die auch im Kolben aufgenommen und in eine erste axiale Richtung (S) beweglich ist und die Betätigung des Dreiwegeventils durch einen Tauchkolben (8) steuert, der in der Lage ist, das erste Ende (71) des rohrförmigen Verschlußteils (70) vom ersten Sitz (72) abzuheben, einer Schubstange (13), die entlang der ersten axialen Richtung (S) beweglich ist und eine entlang dieser ersten axialen Richtung (S) gerichtete Ausgangskraft aufnehmen kann, um sie zu übertragen, und mit Reaktionsmitteln (12), die zwischen der Steuerstange (10) und der Schubstange (13) gelagert sind, um auf die Steuerstange eine Reaktion auszuüben, die mit der Ausgangskraft ansteigt, dadurch gekennzeichnet, daß das Verschlußteil (70) mit einer Bewegungsfreiheit gegenüber dem Tauchkolben (8) entlang der ersten axialen Richtung (S) ausgeführt ist und in einer zur ersten axialen Richtung (S) entgegengesetzten Richtung elastisch gegen den Tauchkolben (8) beaufschlagt wird und daß das erste Ende (71) des Verschlußteils mit einer Masse (15) verbunden ist, die durch Verlagerung des Tauchkolbens (8) in der ersten axialen Richtung (S) in Bewegung versetzt werden kann, um das erste Ende (71) des rohrförmigen Verschlußteils (70) in einem Abstand vom Tauchkolben (8) zurückzuverschieben und somit den Luftdurchsatz zwischen der zweiten Druckquelle (A) und der zweiten Kammer (3b) zu erhöhen.
